# EUROPÄISCHE PATENTSCHRIFT

(11) **EP 0 449 364 B1**
(45) Veröffentlichungstag und Bekanntmachung des Hinweises auf die Patenterteilung: **08.06.1994**
(21) Anmeldenummer: 91200645.9
(22) Anmeldetag: 22.03.1991
(51) Int. Cl.: A01F 25/20

(54) **Vorrichtung zum Ausschneiden von Silofutter aus einem Silofuttervorrat**
Device for cutting out silage from silage stock
Dispositif pour découper de l'ensilage d'une réserve de fourrage ensilée

(30) Priorität: 27.03.1990 NL 9000725
(43) Veröffentlichungstag der Anmeldung: 02.10.1991
(73) Patentinhaber: LITECH B.V., NL-7521 PD Enschede (NL)
(72) Erfinder: Liet, Cornelis Hendricus, NL-7581 PJ Losser (NL); Liet, Fredericus, NL-7581 HD Losser (NL)
(74) Vertreter: de Vries, Johannes Hendrik Fokke

(56) Entgegenhaltungen:
- EP-A- 0 014 154
- EP-A- 0 033 866

## Beschreibung

Die Erfindung bezieht sich auf eine Vorrichtung zum Ausschneiden von Silofutter aus einem Silofuttervorrat mit einem Schneidschild das am unteren Ende ein Schneidorgan trägt und am oberen Ende mit wenigstens einem Schwenkarm zum Auf- und Niederbewegen des Schneidschildes verbunden ist, welcher Schwenkarm am gegenüber dem Schneidschild liegenden Ende drehbar in einem Gestell mit einem Ladebehälter zur Aufnahme des ausgeschnittenen Silofutters gelagert ist, welcher Behälter mit einem Boden, zwei gegenüber einander liegenden Seitenwänden, einer Endwand und einer offenen Zuführseite versehen ist (EP-A-14 154).

Normalerweise ist bei der bekannten Vorrichtung dieser Art das Schneidschild drehbar mit dem Schwenkarm verbunden und mittels einer hydraulischen Zylinder-Kolbeneinheit gegenüber dem Schwenkarm drehbar um das Schneidschild in eine gewünschte Stellung zu bringen zum Ausschneiden von einem Silofutterstück. Zum Ausschneiden von Silofutter wird die Vorrichtung mit der offenen Zuführseite des Behälters etwa gegen die Wand des Silofuttervorrats gesetzt und aus dieser festen Position werden aufeinanderfolgende Silofutterstücke ausgeschnitten. Dadurch hat diese bekannte Vorrichtung den Nachteil, dass die Stellung des Schneidorganes gegenüber den Schneidkreis immer ungünstiger wird und die Schneidwirkung immer schlechter wird.

Der Erfindung liegt die Aufgabe zugründe eine Vorrichtung der obenerwähten Art zu schaffen, bei der dieser Nachteil in einfacher Weise behoben ist.

Zu diesem Zweck ist die erfindungsgemässe Vorrichtung dadurch gekennzeichnet, dass wenigstens ein an die Zuführseite anschliessender Teil von wenigstens einer Seitenwand wenigstens an die am Boden grenzende Seite in die Richtung der Endwand beweglich ist.

In dieser Weise wird erreicht, dass die Vorrichtung nach dem Ausschneiden von einem oderen mehreren Silofutterstücken weiter in die Richtung des Silofuttervorrats verschoben werden kann dadurch, dass der bewegliche Teil der Seitenwand zu die Endwand hin bewegt. Dadurch kann zum Ausschneiden von den aufeinanderfolgenden Silofutterstücken jeweils eine günstige Stellung des Schneidorganes gegenüber dem Schneidkreis aufrechterhalten worden. Ueberdies wird dadurch erreicht, dass der Boden teilweise unter das Silofutter schiebt, sodass die während des Schneidens auftretenden Reaktionskräfte die Vorrichtung nicht aufheben können.

Vorzugsweise ist gemäss der Erfindung die oder jede Seitenwand mit einem an die Endwand anschliessenden festen Seitenwandteil und wenigstens einem beweglichen zwischen der Zuführseite und dem festen Seitenwandteil liegenden Seitenwandteil versehen.

Falls in einer oder beiden Seitenwänden in der Nähe der Endwand eine Abfuhröffnung mit Dosierwalze angeordnet ist, besteht vorzugsweise der bewegliche Seitenwandteil aus zwei oder mehreren auch gegenüber einander beweglichen Teilen.

Eine einfache Aufbau wird erreicht, falls der oder jeder bewegliche Seitenwandteil an der oberen und/oder unteren Seite mit Führungsmitteln verschiebbar ist gegenüber dem festen Seitenwandteil bzw. einem angrenzenden beweglichen Seitenwandteil.

Als Alternativ ist es gemäss einer günstigen Ausführung möglich, dass der oder jeder bewegliche Seitenwandteil durch einen oder mehrere drehbaren Teilen gebildet wird. In diesem Fall können die beweglichen Seitenwandteile an der oberen Seite drehbar mit dem an die Zuführseite grenzenden oberen Rand des festen Seitenwandteiles verbunden sein.

Vorzugsweise ist der oder jeder bewegliche Teil der oder jeder Seitenwand gegen die Wirkung eines Rückstellmittels, zum Beispiel eines Druckfeders, zu die Endwand hin beweglich.

Als Alternativ kann gemäss der Erfindung wenigstens eine Seitenwand an dem an die Zuführseite grenzenden Endrand derart ausgebildet sein, dass diese bis in den Silofuttervorrat hinein verstellbar ist.

Die ausgeschnittenen Silofutterstücke können durch das innenwärts Schwenken des Schneidschildes in den Behälter geschoben werden dadurch, dass das Schneidschild drehbar mit dem Schwenkarm verbunden ist und mittels einer zwischen dem Schneidschild und dem Schwenkarm montierten Zylinder-Kolbeneinheit aus einer neutralen Stellung hin und her schwenkbar ist.

Gemäss einer Ausführung der Erfindung ist die Vorrichtung gekennzeichnet durch Mittel zum in senkrechter Richtung Verstellen des Schneidschildes wenigstens während dem aus der neutralen Stellung in den Behälter hinein Schwenken des Schneidschildes derart, dass das untere Ende des Schneidschildes mit einem im wesentlichen konstanten Spiel entlang dem Boden des Behälters bewegbar ist.

In dieser Weise wird erreicht, dass das untere Ende des Schneidschildes nahezu auf einen konstanten geringen Abstand von dem Boden zu die Endwand hin bewegt, sodass nahezu kein Silofutter bei dem Silofuttervorrat zurück bleibt.

Gemäss einer günstigen Ausführung der Erfindung, bei der der Schwenkarm mittels einer Zylinder-Kolbeneinheit betätigbar ist, welche Zylinder-Kolbeneinheit einerseits über oder unter der Lagerung des Schwenkarmes im Gestell drehbar mit diesem Gestell verbunden ist, ist die Zylinder-Kolbeneinheit zum Betätigen des Schwenkarmes anderseits drehbar mit dem Schneidschild verbunden derart, dass der drehbare Verbindungspunkt des Schneidschildes mit dem Schwenkarm in seiner neutralen Stellung etwa in einer Flucht liegt mit der Verbindungslinie der Verbindungspunkte der Zylinder-Kolbeneinheit des Schwenkarmes.

Die Erfindung wird nachstehend näher erlautert anhand der Zeichnung, in der drei Ausführungen der erfindungsgemässen Vorrichtung schematisch dargestellt sind.

Fig. 1 ist eine schematisch teilweise in Durchschnitt dargestellte Seitenansicht einer ersten Ausführung der erfindungsgemässen Vorrichtung.

Fig. 2 ist eine Obenansicht der Vorrichtung aus Fig. 1.

Fig. 3 ist eine Fig. 1 entsprechende Seitenansicht einer zweiten Ausführung der erfindungsgemässen Vorrichtung.

Fig. 4 ist eine Fig. 3 entsprechende Seitenansicht, wobei das Schneidschild sich in eingezogenem Zustand befindet.

Fig. 5 ist eine Fig. 1 entsprechende Seitenansicht einer dritten Ausführung der erfindungsgemässen Vorrichtung.

Fig. 6 ist eine Obenansicht der Vorrichtung aus Fig. 5.

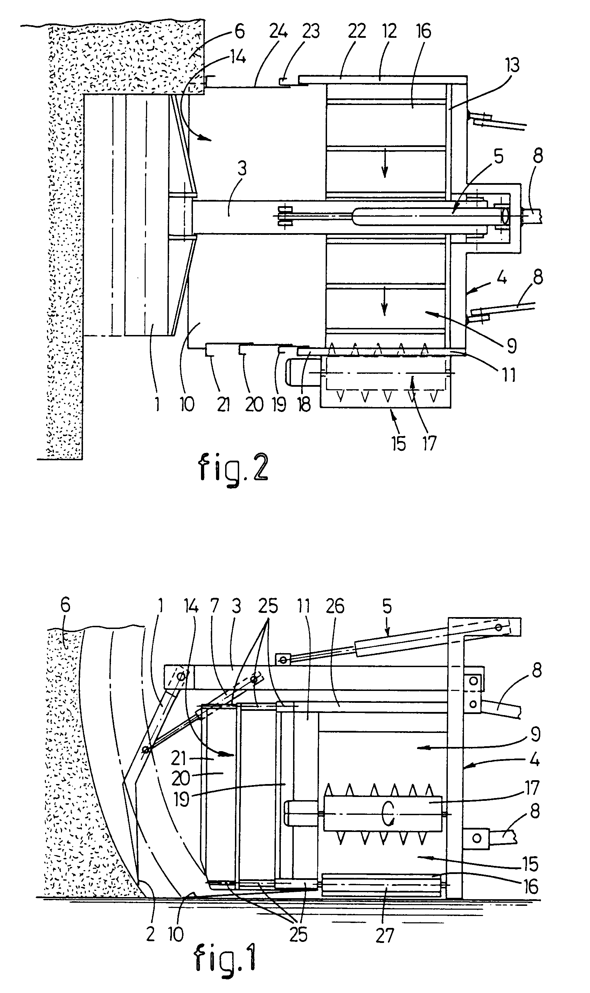

In Fig. 1 ist eine Vorrichtung zum Ausschneiden von Silofutter aus einem Silofuttervorrat dargestellt, die mit einem Schneidschild 1 versehen ist, das am unteren Ende ein nicht weiter gezeigtes Schneidorgan 2 trägt. Dieses Schneidorgan 2 kann zum Beispiel aus einem stationären Schneidmesser und einem auf dessen Innenseite hin und her beweglichen Schneidmesser bestehen. Das Schneidorgan kann auch nur aus festen Zähnen bestehen, die durch Niederdrucken und Einziehen des Schneidschildes 1 das Silofutter aus dem Silofuttervorrat auftrennen müssen. Mit dem Wort "Schneidschild" wird deshalb jeder Typ von Silofutterherausziehschild gemeint. Am oberen Ende ist das Schneidschild 1 drehbar verbunden mit dem einen Ende eines Schwenkarmes 3, der am unteren Ende drehbar in einem Gestell 4 gelagert ist. Zwischen dem Gestell 4 und dem Schwenkarm 3 ist eine hydraulische Zylinder-Kolbeneinheit 5 angeordnet zum Betätigen des Schwenkarmes, sodass das Schneidschild 1 auf und nieder bewogen werden kann zum Ausschneiden eines Silofutterstückes aus einem schematisch dargestellten Silofuttervorrat 6. Die Stellung des Schneidschildes 1 gegenüber dem Schwenkarm 3 ist einstellbar mittels einer Zylinder-Kolbeneinheit 7, die zwischen dem Schneidschild 1 und dem Schwenkarm 3 montiert ist.

Das Gestell 4 ist mittels Stangen 8 kuppelbar mit der Dreipunkthebevorrichtung eines nichtgezeigten Schleppers zum Versetzen der Vorrichtung. Selbstverständlich ist es auch möglich die Vorrichtung mit Rädern zu versehen, sodass diese fahrbar ist.

Das Gestell 4 hat weiterhin einen Ladebehälter 9, der mit einem Boden 10, aufstehenden Seitenwänden 11, 12 und einer Endwand 13 versehen ist, wobei gegenüber der Endwand 13 eine offene Zuführseite 14 liegt, wo das durch das Schneidschild 1 ausgeschnittene Silofutter durch das Schneidschild in den Ladebehälter 9 geschoben werden kann. Bei der Endwand 13 ist in der einen Seitenwand 11 eine Abfuhröffnung 15 angeordnet, durch welche Abfuhröffnung 15 das Silofutter dosiert an das Vieh abgegeben werden kann. Dazu ist in den Ladebehälter 9 ein Querförderer 16 angeordnet, der in der Nähe von der Abfuhröffnung 15 mit einer Dosierwalze 17 zusammenwirkt.

Die Seitenwand 11 ist bei der Vorrichtung gemäss Fig. 1 und 2 aus einem an die Endwand 13 anschliessenden festen Seitenwandteil 18 und drei in der Richtung von der Endwand 13 schiebbaren Seitenwandteilen 19, 20, 21 aufgebaut. Die Abmessungen dieser schiebbaren Seitenwandteile 19-21 sind derart, dass die Dosierwalze 17 frei bleibt.

Die Seitenwand 12 umfasst einen an die Endwand 13 anschliessenden festen Seitenwandteil 22 und zwei bewegliche Seitenwandteile 23, 24.

Während der Anwendung der Vorrichtung zum Ausschneiden von Silofutter aus dem Silofuttervorrat 6 wird die Vorrichtung erst durch den Schlepper mit der offenen Zuführseite 14 etwa gegen den Silofuttervorrat gesetzt, worauf durch Betätigung der Zylinder-Kolbeneinheiten 5 und 7 ein oder mehrere Silofutterstücke aus dem Silofuttervorrat geschnitten werden können, wie durch eine unterbrochene Linie schematisch gezeigt ist. Nach einigen Silofutterstücken wird die Stellung des Schneidorganes 2 gegenüber dem Schneidkreis jedoch ungünstig und geht die Schneidwirkung nahezu verloren. Die Vorrichtung kann nun weiter in den Silofuttervorrat 6 geschoben werden durch den Schlepper rückwärts zu fahren, wobei die beweglichen Seitenwandteile 23, 24 der Seitenwand 12 gegen die Wirkung eines nicht weiter gezeigten Rückstellmittels, wie ein Druckfeder, innenwärts geschoben werden. Der Boden 10 schiebt dabei unter das Silofutter, wodurch aufheben von der Vorrichtung durch die während des Schneidens auftretenden Reaktionskräfte nahezu nicht mehr stattfinden kann.

Nachdem die Vorrichtung so weiter in den Silofuttervorrat versetzt ist, können weitere Silofutterstücke ausgeschnitten werden, wobei das Schneidorgan 2 sich weder in einer günstigen Stellung gegenüber den Schneidkreis befindet.

Die Seitenwand 11 umfasst die beweglichen Seitenwandteile 19-21 zur Anwendung der Vorrichtung in einem Fahrsilo mit aufstehenden Wänden, wobei normalerweise in der Mitte des Silofuttervorrates angefangen wird, sodass dan beide Seitenwände 11, 12 zu die Endwand hin beweglich sein sollen. Zur Anwendung bei Fahrsilos ohne aufstehende Wände, ist eine bewegliche Seitenwand ausreichend.

Es wird bemerkt, dass obwohl bei der gezeigten Vorrichtung gemäss Fig. 1 und 2 jede Seitenwand einige beweglichen Teile hat, es auch möglich ist die Seitenwand 12 mit einem beweglichen Teil auszubilden. Falls ein anderer Typ von Abfuhrmechanismus angewandt wird, kann auch die Seitenwand 11 mit nur einem beweglichen Seitenwandteil ausgebildet sein.

Die beweglichen Seitenwandteile 19-21 und 23, 24 sind bei der dargestellten Ausführung an der oberen und unteren Seiten mit Führungsprofilen in einander und in einem Führungsprofil 26 des festen Seitenwandteiles 18 bzw. 22 verschiebbar. An der unteren Seite sind die beweglichen Seitenwandteile 19-21 der Seitenwand 11 jedoch in einem Führungsprofil 27 verschiebbar, das zwischen dem oberen und unteren Trum des Querförderers 16 liegt.

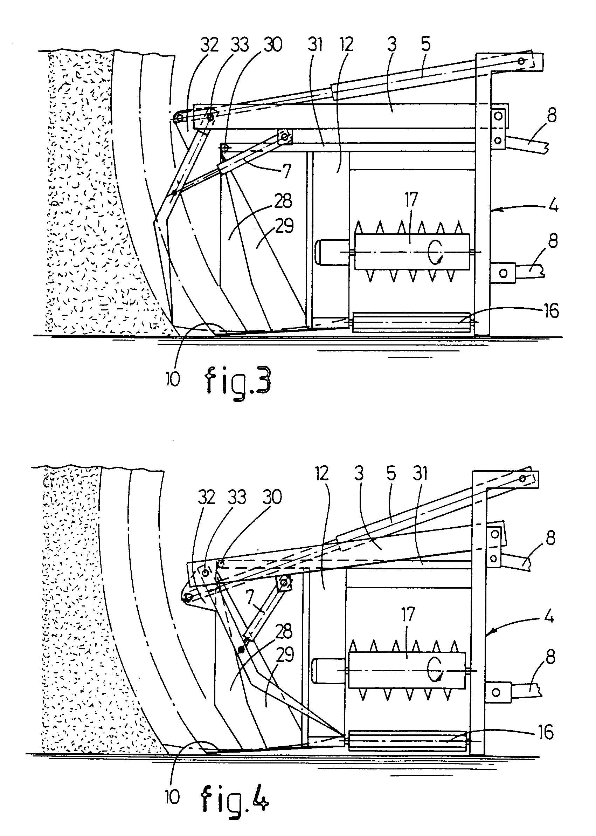

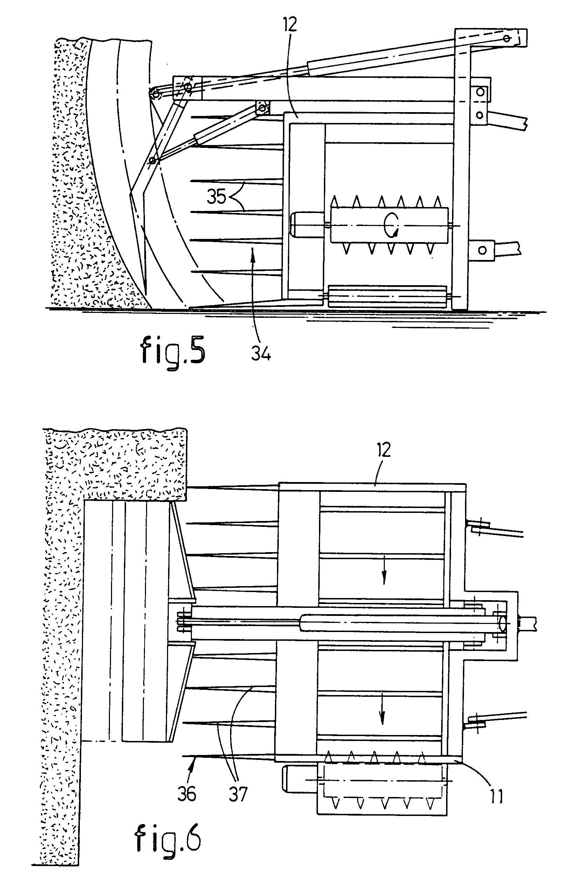

In den Fig. 3 und 4 ist eine alternative Ausführung der beschriebenen Vorrichtung dargestellt, die im wesentlichen in gleicher Weise ausgebildet ist wie die Vorrichtung gemäss Fig. 1 und 2 und wobei entsprechende Teile mit den gleichen Bezugszeichen angegeben sind.

In diesem Fall sind bewegliche Seitenwandteile 28, 29 angewandt, die an der oberen Seite bei 30 drehbar mit dem Oberrand 31 des festen Seitenwandteiles 12 verbunden sind. Auch durch diese drehbaren Seitenwandteilen 28, 29 kann die Vorrichtung nach Ausschneiden von einigen Silofutterstücken aus dem Silofuttervorrat 6 weiter in den Vorrat geschoben werden, da Stossen auf den Silofuttervorrat tatsächlich nur bei dem Boden 10 stattfindet.

Das ausgeschnittene Silofutter wird durch einziehen von der Zylinder-Kolbeneinheit 7 durch das Schneidschild 1 in den Ladebehälter 9 geschoben. Um möglichst wenig Silofutter zu verlieren, ist es erwünscht, dass das Ende des Schneidschildes 1 möglichst nahe über den Boden 10 des Ladebehälters 9 bewegt. Bei der Vorrichtung gemäss Fig. 3 und 4 ist die Zylinder-Kolbeneinheit 5 zur Betätigung des Schwenkarmes 3 mittels eines Kuppelbleches 32 mit dem Schneidschild 1 verbunden. In einer neutralen Stellung des Schneidschildes 1, in der das Schneidorgan 2 sich etwa bei dem Ende des Bodens 10 befindet, liegt der Drehpunkt 33 des Schneidschildes 1 etwa in einer Flucht mit der Verbindungslinie der Befestigungspunkte der Zylinder-Kolbeneinheit 5 mit dem Kuppelblech 32 bzw. dem Gestell 4. Dieser letzte Verbindungspunkt liegt selbstverständlich ober dem Lagerpunkt des Schwenkarmes 3 im Gestell. Naturlich sind die Verbindungen der Zylinder-Kolbeneinheit 5 mit dem Gestell 4 und dem Kuppelblech 32 drehbare Verbindungen. Wenn nun das Schneidschild 1 aus der erwähnten neutralen Stellung zu die in Fig. 4 gezeigte eingezogene Stellung versetzt wird, wird zugleich der Schwenkarm 13 herunter bewegen, wodurch das Ende des Schneidschildes 1 sich in einem nahezu konstanten geringen Abstand von dem Boden 10 innenwärts versetzt.

Es wird bemerkt, dass dieser Verbindungsbau der Zylinder-Kolbeneinheit 5 naturlich auch bei der Vorrichtung gemäss Fig. 1 und 2 angewandt werden kann.

Gemäss einer in Fig. 5 und 6 gezeigten alternativen Ausführung der Erfindung kann wenigstens eine Seitenwand 11 oder 12 an dem an die Zuführseite grenzenden Endrand derart ausgebildet sein, dass dieser bis in den Silofuttervorrat verstellt werden kann. Dies kann zum Beispiel erreicht werden dadurch, dass wenigstens der an die Zuführseite anschliessende Teil der (jeder) Seitenwand 11, 12 wie eine Gabel 34 mit spitzen Zähnen 35 ausgebildet ist. Bei Bedarf ist es möglich der Endrand jeder Seitenwand 11, 12 mit einem Schneidorgan auszubilden. Die Ausführung mit einer Gabel 34 hat den wichtigen Vorteil, dass die Vorrichtung dadurch sozusagen in dem Silofutter verankert wird, wodurch die während des Schneidens auftretenden Reaktionskräften die Vorrichtung nicht aufheben können.

Auch der Boden 10 kann mit einer Gabel 36 mit spitzen Zähnen 37 ausgebildet sein. Dadurch kann die Vorrichtung auch auf einem ober den Boden liegenden Niveau Silofutter aus einem Silofuttervorrat schneiden.

Es wirdt bemerkt, dass auf Wünsch auch bei den anderen Ausführungen der Boden 10 mit einer solchen Gabel 36 ausgebildet sein kann. Weiterhin ist es möglich auch bei den anderen Ausführungen ein oder beide Endrande der Seitenwände 11, 12 mit einem oder mehreren Zähnen zu versehen, die während des Schneidens im Silofutter stecken um die Vorrichtung fest zu halten und so Reaktionskräfte aufzufangen.

## Patentansprüche

1. Vorrichtung zum Ausschneiden von Silofutter aus einem Silofuttervorrat mit einem Schneidschild (1) das am unteren Ende ein Schneidorgan (2) trägt und am oberen Ende mit wenigstens einem Schwenkarm (3) zum Auf- und Niederbewegen des Schneidschildes (1) verbunden ist, welcher Schwenkarm (3) am gegenüber dem Schneidschild (1) liegenden Ende drehbar in einem Gestell (4) mit einem Ladebehälter (9) zur Aufnahme des ausgeschnittenen Silofutters gelagert ist, welcher Behälter (9) mit einem Boden 10, zwei gegenüber einander liegenden Seitenwänden (11,12), einer Endwand (13) und einer offenen Zuführseite (14) versehen ist, dadurch gekennzeichnet, dass wenigstens ein an die Zuführseite (14) anschliessender Teil von wenigstens einer Seitenwand (11,12) wenigstens an die am Boden grenzende Seite in die Richtung der Endwand (13) beweglich ist.

2. Vorrichtung gemäss Anspruch 1, dadurch gekennzeichnet, dass die oder jede Seitenwand (11,12) mit einem an die Endwand (13) anschliessenden festen Seitenwandteil (18,22) und wenigstens einem beweglichen zwischen der Zuführseite (14) und dem festen Seitenwandteil (18) liegenden Seitenwandteil (19,20,21,23,24,28,29) versehen ist.

3. Vorrichtung gemäss Anspruch 2, dadurch gekennzeichnet, dass der bewegliche Seitenwandteil (19-21,22,24) aus zwei oder mehreren auch gegenüber einander beweglichen Teilen besteht.

4. Vorrichtung gemäss Anspruch 1, 2 oder 3, dadurch gekennzeichnet, dass der oder jeder bewegliche Seitenwandteil (19-21),23,24 an der oberen und/oder unteren Seite mit Führungsmitteln (26,27) verschiebbar ist gegenüber dem festen Seitenwandteil (18,22) bzw. einem angrenzenden beweglichen Seitenwandteil.

5. Vorrichtung gemäss Anspruch 1, 2 oder 3, dadurch gekennzeichnet, dass der oder jeder bewegliche Seitenwandteil (28,29) durch einen oder mehrere drehbaren Teilen gebildet wird.

6. Vorrichtung gemäss Anspruch 5, dadurch gekennzeichnet, dass die beweglichen Seitenwandteile (28,29) an der oberen Seite drehbar mit dem an der Zuführseite (14) grenzenden oberen Rand des festen Seitenwandteiles (11,12) verbunden sind.

7. Vorrichtung gemäss einem der vorhergehenden Ansprüche, dadurch gekennzeichnet, dass der oder jeder bewegliche Teil (19-21,22,23,28,29) der oder jeder. Seitenwand (11,12) gegen die Wirkung eines Rückstellmittels, zum Beispiel einer Druckfeder, zur Endwand (13) hin beweglich ist.

8. Vorrichtung gemäss einem der vorhergehenden Ansprüche, dadurch gekennzeichnet, dass an der Zuführseite (14) des Behälters (9) Mittel angeordnet sind zum Verankern des Behälters (9) in dem Silofuttervorrat, wie zum Beispiel ein oder mehrere Zähne.

9. Vorrichtung zum Ausschneiden von Silofutter aus einem Silofuttervorrat mit einem Schneidschild (1) das am unteren Ende ein Schneidorgan (2) trägt und am oberen Ende mit wenigstens einem Schwenkarm (3) zum Auf- und Niederbewegen des Schneidschildes (1) verbunden ist, welcher Schwenkarm (3) am gegenüber dem Schneidschild (1) liegenden Ende drehbar in einem Gestell (4) mit einem Ladebehälter (9) zur Aufnahme des ausgeschnittenen Silofutters gelagert ist, welcher Behälter (9) mit einem Boden (10), zwei gegenüber einander liegenden Seitenwänden (11,12), einer Endwand (13) und einer offener Zuführseite (14) versehen ist, dadurch gekennzeichnet, dass wenigstens eine Seitenwand (11,12) an dem an die Zuführseite (14) grenzenden Endrand derart ausgebildet ist, dass diese bis in den Silofuttervorrat hinein verstellbar ist.

10. Vorrichtung gemäss Anspruch 9, dadurch gekennzeichnet, dass wenigstens der an die Zuführseite (14) anschliessende Teil der oder jeder Seitenwand (11,12) wie eine Gabel (34) mit spitzen Zähnen (35) ausgebildet ist.

11. Vorrichtung gemäss Anspruch 9, dadurch gekennzeichnet, dass der Endrand der oder jeder Seitenwand (11,12) mit einem Schneidorgan (37) versehen ist.

12. Vorrichtung, gemäss einem der vorhergehenden Ansprüche, bei der das Schneidschild (1) drehbar mit dem Schwenkarm (3) verbunden ist und mittels einer zwischen dem Schneidschild (1) und dem Schwenkarm (3) montierten Zylinder-Kolbeneinheit (7) aus einer neutralen Stellung hin und her schwenkbar ist, gekennzeichnet durch Mittel (5) zum in senkrechter Richtung Verstellen des Schneidschildes wenigstens während dem aus der neutralen Stellung in den Behälter hinein Schwenken des Schneidschildes (1) derart, dass das untere Ende des Schneidschildes (1) mit einem im wesentlichen konstanten Spiel entlang dem Boden des Behälters bewegbar ist.

13. Vorrichtung gemäss Anspruch 12, bei der der Schwenkarm (3) mittels einer Zylinder-Kolbeneinheit betätigbar ist, welche Zylinder-Kolbeneinheit einerseits über oder unter der Lagerung des Schwenkarmes (3) im Gestell (4) drehbar mit diesem Gestell verbunden ist, dadurch gekennzeichnet, dass die Zylinder-Kolbeneinheit (5) zum Betätigen des Schwenkarmes (3) anderseits drehbar mit dem Schneidschild (1) verbunden ist derart, dass der drehbare Verbindungspunkt des Schneidschildes (1) mit dem Schwenkarm (3) in seiner neutralen Stellung etwa in einer Flucht liegt mit der Verbindungslinie der Verbindungspunkte der Zylinder-Kolbeneinheit (5) des Schwenkarmes (3).

## Claims

1. A device for cutting out silage from a silage store using a cutting plate (1) carrying a cutting member (2) at the bottom end and being connected at the top end with at least one swivel arm (3) for the upwards and downwards movement of the cutting plate (1), which swivel arm (3) is rotatably mounted, by means of the end facing the cutting plate (1), in a support (4) comprising a loading container (9) for receiving the cut-out silage, said container (9) having a floor (10), two facing side walls (11, 12), an end wall (13) and an open feed side (14), characterised in that at least a part adjoining the feed side (14) of at least one side wall (11, 12) is movable in the direction of the end wall (13) at least on the side bordering the floor.

2. A device according to claim 1, characterised in that the side wall or each side wall (11, 12) is provided with a fixed side wall part (18, 22) adjoining the end wall (13) and at least one movable side wall part (19, 20, 21, 23, 25, 28, 29) positioned between the feed side (14) and the fixed side wall part (18).

3. A device according to claim 2, characterised in that the movable side wall part (19-21, 23, 25) consists of two or several parts which are also movable relative to one another.

4. A device according to claim 1, 2 or 3, characterised in that the movable side wall part or each movable side wall part (19-21, 23, 25) may be displaced by guide means (26, 27) on the top and/or bottom side, relative to the fixed side wall part (18, 22) or an adjoining movable side wall part.

5. A device according to claim 1, 2 or 3, characterised in that the or each movable side wall part (28, 29) is formed by one or several rotatable parts.

6. A device according to claim 5, characterised in that the movable side wall parts (28, 29) are rotatably connected on the top side with the upper edge of the fixed side wall part (11, 12), adjoining the feed side (14).

7. A device according to any one of the preceding claims, characterised in that the movable part or each movable part (19-21, 22, 23, 28, 29) of the side wall or each side wall (11, 12) is movable in the direction of the end wall (13) against the action of a restoring means, for example a compression spring.

8. A device according to any one of the preceding claims, characterised in that means are arranged on the feed side (14) for the anchorage of the container (9) in the silage store, for example one or several teeth.

9. A device for cutting-out silage from a silage store, using a cutting plate (1) carrying a cutting member (2) at the bottom end and being connected at the top end, with at least one swivel arm (3) for the upwards and downwards movement of the cutting plate (1), said swivel arm (3) being rotatably mounted at the end facing the cutting plate (1) in a support (4) comprising a loading container (9) for receiving the cut-out silage, said container (9) being provided with a floor (10), two facing side walls (11, 12), an end wall (13) and an open feed side (14), characterised in that at least one of the side walls (11, 12) is constructed on the end edge adjoining the feed side (14) such that said side wall is adjustable so as to reach into the silage store.

10. A device according to claim 9, characterised in that at least the part of the side wall or each side wall (11, 12), adjoining the feed side (14), is in the form of a fork (34) having pointed teeth (35).

11. A device according to claim 9, characterised in that the end edge of the side wall or each side wall (11, 12) is provided with a cutting member (37).

12. A device according to any one of the preceding claims, in which the cutting plate (1) is rotatably connected with the swivel arm (3) and is pivotable to and fro from a neutral position by means of a cylinder-piston unit (7) mounted between the cutting plate (1) and the swivel arm (3), characterised by means (5), for adjusting the cutting plate in the vertical direction at least during the movement of the cutting plate (1) from the neutral position into the inside of the container such that the bottom end of the cutting plate (1) is movable along the floor of the container with a substantially constant play.

13. A device according to claim 12, in which the swivel arm (3) is operable by means of a cylinder-piston unit (7), which cylinder-piston unit (7), on the one hand, is connected with the support (4) so as to be rotatable above or below the mount of the swivel arm (3) in said support, characterised in that the cylinder-piston unit (5) for actuating the swivel arm (3), on the other hand, is rotatably connected with the cutting plate (1) so that the rotatable connecting point of the cutting plate (1) and the swivel arm (3) in the neutral position thereof is substantially in alignment with the connecting line of the connecting points of the cylinder-piston unit (5) of the swivel arm (3).

## Revendications

1. Dispositif pour retirer du fourrage, en le découpant, d'une réserve de fourrage ensilé, avec un bouclier de coupe (1) qui porte à son extrémité inférieure un organe de coupe (2) et est relié, à son extrémité supérieure, à au moins un bras pivotant (3) pour relever et abaisser le bouclier de coupe (1), le bras pivotant (3) étant monté, à son extrémité opposée au bouclier de coupe (1), à rotation dans un bâti (4) présentant un récipient de chargement (9) pour recevoir le fourrage découpé, le récipient (9) étant pourvu d'un fond (10), de deux parois latérales opposées (11, 12), d'une paroi terminale (13) et d'un côté d'alimentation ouvert (14), **caractérisé** en ce qu'au moins une partie, se raccordant au côté d'alimentation (14), d'au moins une paroi latérale (11, 12) est mobile, au moins sur le côté limitrophe du fond, dans la direction de la paroi terminale (13).

2. Dispositif selon la revendication 1, **caractérisé** en ce que la ou chaque paroi latérale (11, 12) est pourvue d'une partie de paroi latérale fixe (18, 22) se raccordant à la paroi terminale (13), et d'au moins une partie de paroi latérale mobile (19, 20, 21, 23, 24, 28, 29), située entre le côté d'alimentation (14) et la partie de paroi latérale fixe (18).

3. Dispositif selon la revendication 2, **caractérisé** en ce que la partie de paroi latérale mobile (19-21, 23, 24) est constituée de deux ou plusieurs éléments, également mobiles les uns par rapport aux autres.

4. Dispositif selon la revendication 1, 2 ou 3, **caractérisé** en ce que la ou chaque partie de paroi latérale mobile (19-21, 23, 24) est mobile en coulissement, à l'aide de moyens de guidage (26, 27) sur le côté supérieur et/ou inférieur, par rapport à la partie de paroi latérale fixe (18, 22) ou à une partie de paroi latérale mobile limitrophe.

5. Dispositif selon la revendication 1, 2 ou 3, **caractérisé** en ce que la ou chaque partie de paroi latérale mobile (28, 29) est constituée d'un ou plusieurs éléments rotatifs.

6. Dispositif selon la revendication 5, **caractérisé** en ce que les parties de paroi latérale mobiles (28, 29) sont reliées à rotation, sur leur côté supérieur, au bord supérieur, limitrophe du côté d'alimentation (14), de la partie de paroi latérale fixe (11, 12).

7. Dispositif selon l'une quelconque des revendications précédentes, **caractérisé** en ce que la ou chaque partie de paroi latérale mobile (19, 20, 21, 23, 24, 28, 29) de la ou chaque paroi latérale (11, 12) est mobile en direction de la paroi terminale (13) contre l'action d'un moyen de rappel, par exemple un ressort de pression.

8. Dispositif selon l'une quelconque des revendications précédentes, **caractérisé** en ce que des moyens, par exemple une ou plusieurs dents, sont disposés sur le côté d'alimentation (14) du récipient (9) pour ancrer le récipient (9) dans la réserve de fourrage ensilé.

9. Dispositif pour retirer du fourrage, en le découpant, d'une réserve de fourrage ensilé, avec un bouclier de coupe (1) qui porte à son extrémité inférieure un organe de coupe (2) et est relié, à son extrémité supérieure, à au moins un bras pivotant (3) pour relever et abaisser le bouclier de coupe (1), le bras pivotant (3) étant monté, à son extrémité opposée au bouclier de coupe (1), à rotation dans un bâti (4) présentant un récipient de chargement (9) pour recevoir le fourrage découpé, le récipient (9) étant pourvu d'un fond (10), de deux parois latérales opposées (11, 12), d'une paroi terminale (13) et d'un côté d'alimentation ouvert (14), **caractérisé** en ce qu'au moins une paroi latérale (11, 12) est configurée, sur son bord terminal se raccordant au côté d'alimentation (14), de telle sorte que cette paroi peut être déplacée jusque dans la réserve de fourrage ensilé.

10. Dispositif selon la revendication 9, **caractérisé** en ce qu'au moins la partie de la ou chaque paroi latérale (11, 12) qui se raccorde au côté d'alimentation (14) est réalisée en forme de fourche (34) avec des dents pointues (35),

11. Dispositif selon la revendication 9, **caractérisé** en ce que le bord terminal de la ou chaque paroi latérale (11, 12) est pourvu d'un organe de coupe.

12. Dispositif selon l'une quelconque des revendications précédentes, dans lequel le bouclier de coupe (1) est relié à rotation au bras pivotant (3) et peut, au moyen d'un ensemble cylindre-piston (7) monté entre le bouclier de coupe (1) et le bras pivotant (3), être pivoté en va-et-vient à partir d'une position neutre, **caractérisé** par un moyen (5) pour déplacer le bouclier de coupe en direction verticale, au moins pendant le pivotement du bouclier de coupe (1) à l'intérieur du récipient à partir de la position neutre, de telle sorte que l'extrémité inférieure du bouclier de coupe (1) peut être déplacée avec un jeu sensiblement constant le long du fond du récipient.

13. Dispositif selon la revendication 12, dans lequel le bras pivotant (3) peut être actionné au moyen d'un ensemble cylindre-piston (5), cet ensemble cylindre-piston (5) étant d'une part relié à rotation au bâti (4) au-dessus ou en dessous du montage du bras pivotant (3) dans ce bâti (4), **caractérisé** en ce que l'ensemble cylindre-piston (5) pour actionner le bras pivotant (3) est d'autre part relié à rotation au bouclier de coupe (1) de telle sorte que le point de liaison rotative du bouclier de coupe (1) avec le bras pivotant (3) se trouve, dans la position neutre, approximativement en alignement avec la droite de jonction des points de liaison de l'ensemble cylindre-piston (5) du bras pivotant (3).
